# EUROPEAN PATENT SPECIFICATION

(11) **EP 2 446 989 B1**
(45) Date of publication and mention of the grant of the patent: **14.12.2016**
(21) Application number: 10189467.3
(22) Date of filing: 29.10.2010
(51) Int. Cl.: B23B 27/14, B23B 27/16

(54) **Axial plunging cutting insert, axial plunging cutting tool and method of performing an axial plunging operation**
Axialer Einstechschneideinsatz, axiales Einstechschneidwerkzeug und Verfahren zum axialen Einstechschneiden
Insert de coupe de plongée axiale, outil de coupe de plongée axiale et méthode de coupe en plongée axiale

(43) Date of publication of application: 02.05.2012
(73) Proprietor: Seco Tools AB, 737 82 Fagersta (SE)
(72) Inventor: Alm, Per, SE-737 44, Fagersta (SE)
(74) Representative: Hägglöf, Henrik

(56) References cited:
- EP-A1- 1 772 218
- FR-A5- 2 164 302
- JP-U- 63 136 807
- US-A- 4 131 383
- US-A1- 2002 034 425
- US-A1- 2002 104 411
- US-A1- 2010 088 874
- US-A1- 2012 144 966

## Description

### BACKGROUND AND SUMMARY

The present invention relates to an axial plunging cutting insert according to the preamble of claim 1. Such a cutting insert is known from JP 63-136807 U. The present invention also relates to a method for performing an axial plunging operation on a rotating workpiece according to claim 11.

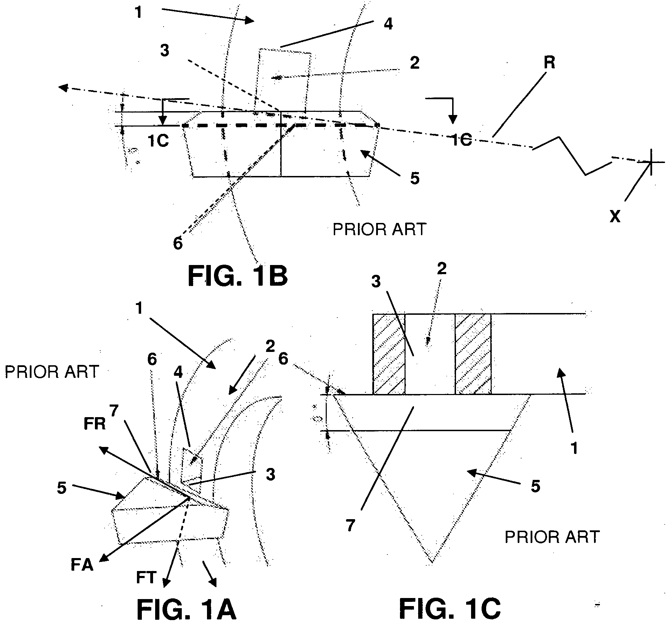

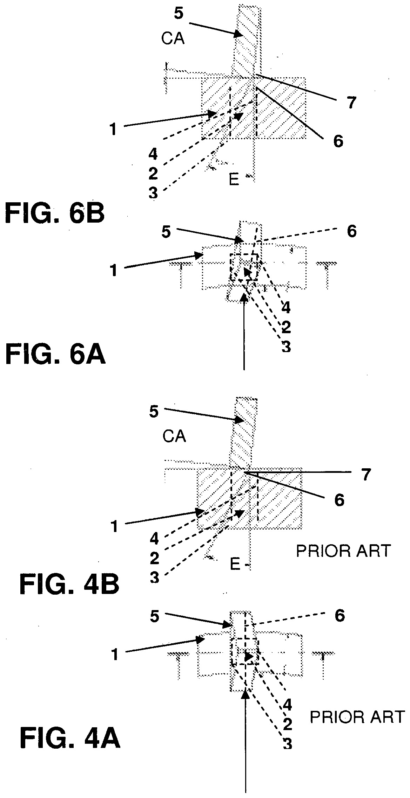

FIGS. 1A-1C, 2A-2C, and 3A-3C show various stages in an axial plunging operation performed on a rotating workpiece 1 having a rectangular window 2 therein, with two sides 3, 4 of the rectangle oriented substantially along radial lines R extending from the axis X of rotation of the workpiece. Typically, during such operations, a cutting insert 5 forming part of a cutting tool including a toolholder that holds the insert is held relative to the workpiece so that a cutting edge 6 of the insert extends along a radial line R extending from the axis X of rotation of the workpiece. The cutting edge 6 is often followed by a chamfer 7 having a 0° angle, i.e., having a substantially constant size along the length of the cutting edge. The angle E is the angle of the chamfer 7 relative to a perpendicular to the workpiece 1 and is a function of the angle at which the insert 5 is held relative to the workpiece. The angle CA is the clearance angle that the side of the insert 5 below the cutting edge 6 forms with the workpiece 1. As seen in FIGS. 4A-4B, because there are substantial forces generated during the operation, the insert is often an insert with a negative insert geometry and is held at a negative axial angle relative to the axis X of rotation of the workpiece 1.

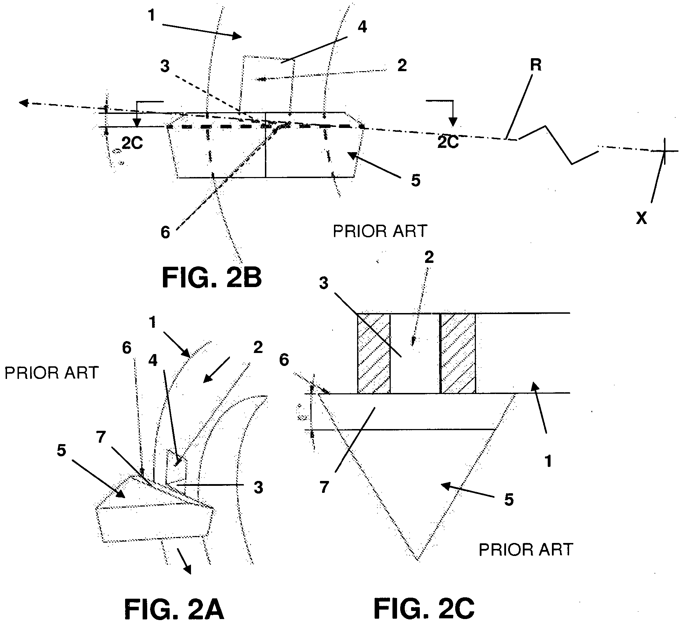

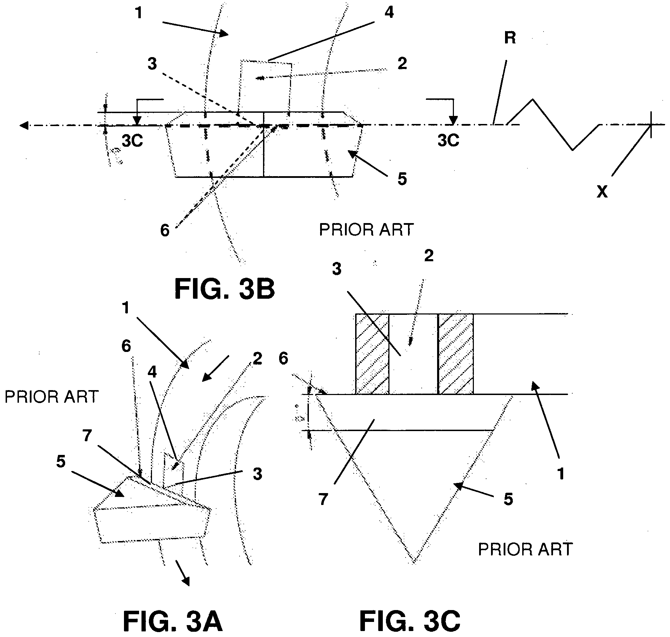

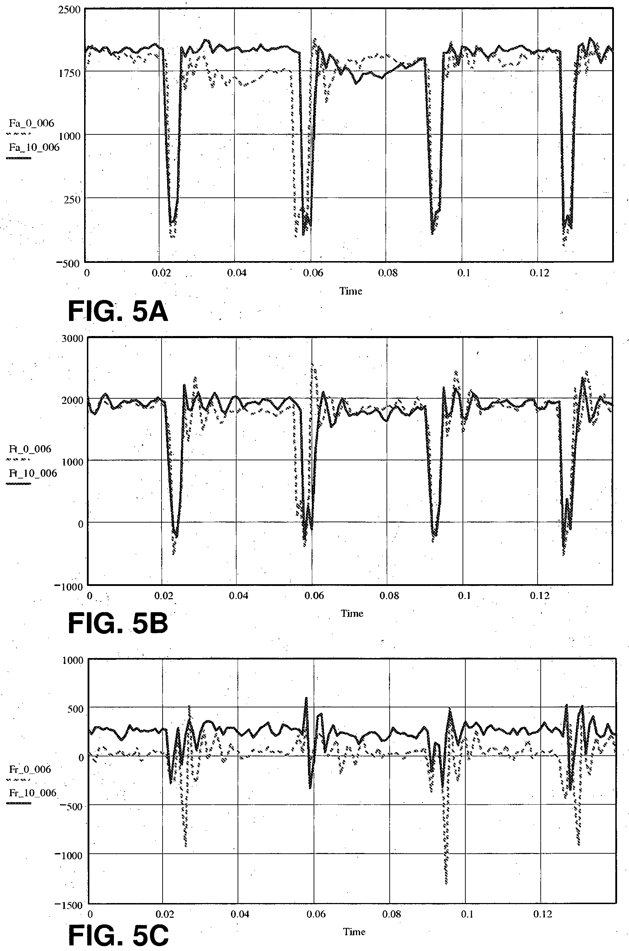

FIGS. 1A-1C and 2A-2C show the insert 5 as the window 2 in the workpiece 1 approaches the cutting edge 6 of the insert. As seen in FIG. 1A, during any cutting operation, axial forces FA, tangential forces FT, and radial forces FR are applied to the insert. In FIGS. 3A-3C, the first side 3 of the rectangular window 2 coincides substantially exactly with the cutting edge. At this point, particularly as seen with reference to the dotted lines in the graph at FIG. 5B, there are substantially lower peaks in the tangential force FT as the cutting edge resumes contact with the workpiece after passing over a window, and, ordinarily, lower peaks in the axial forces FA shown in FIG. 5A. Moreover, because the angled cutting edge loses contact with the workpiece over a longer period of time than the non-angled cutting edge as it enters the window and resumes contact over a longer period of time when it exits the window, the slope of the FT and FA lines for the angled insert tends to be less than the slope of those lines for the non-angled insert. Because there are less abrupt changes in force, there tends to be less noise and vibration. There is, in theory, substantially no radial force FR when the cutting edge is aligned with the first side 3 of the window 2, however, in practice, spikes in radial force have been observed. As seen by the dotted line in FIG. 5C, the amplitude of these spikes tends to be smaller than the amplitude of the tangential and axial forces. As the workpiece 1 continues to turn relative to the insert 5, the second side 4 of the rectangular window 2 also substantially coincides exactly with the cutting edge, which results in a substantial increase in tangential, axial, and radial forces, substantially above the level of those forces immediately preceding entry of the cutting edge into the window, usually manifested by an audible clunking sound. The large forces occurring at this point risk damage to the workpiece and tend to shorten the life of the insert.

JP63-136807U discloses a triangular turning insert having cutting edges extending at corner portions thereof.

The inventors have recognized that, by orienting the cutting edge 6 of the insert 5 at an angle to a radial line R extending from the axis X of rotation of the workpiece I as seen in FIGS. 6A and 6B, the cutting edge is not parallel to the sides 3 and 4 of the rectangular window 2 and gradually enters and exits the window. Consequently, as seen from the solid lines in FIGS. 5A-5C, there is a substantial drop in tangential, axial, and radial forces FT, FA, and FR on the insert 5 as the cutting edge 6 passes the first side 3 of the window 2, followed by a resumption of tangential, axial, and radial forces at the same level as before the cutting edge entered the window when the cutting edge passes the second side 4 of the window. While not wishing to be bound by theory, because the cutting edge 6 of the angled insert 5 gradually passes the sides 3 and 4 of the window 2, the slope of the drop-off and rise in tangential and axial forces on the angled insert tends to be less steep than the slope of the drop-off and rise in the tangential and axial forces on the insert that is not angled. It is believe that, as a consequence of performing an axial plunging operation in this manner, the operation tends to be substantially quieter than performing an axial plunging operation in the manner shown in FIGS. 1A-3C. The data shown graphically in FIGS. 5A-5C is for an insert that is oriented at a 10° angle to the radial line R. The inventors have noted that, during a continuous cutting operation (i.e., no window) there tend to be larger radial forces FR on the insert when it is oriented at an angle to radial line R. While not wishing to be bound by theory, this is likely because, at least for a workpiece 1 that is narrower than the cutting edge 6, a greater length of the cutting edge is in contact with the workpiece during the cutting operation, and a greater portion of the cutting edge extends in a direction perpendicular to the radial line R so that additional radially directed forces tend to act on the insert. Axial and tangential forces on the insert oriented at an angle to the radial line R during a continuous cutting operation tend to be similar to the axial and tangential forces during a continuous cutting operation, with tangential forces tending to be slightly lower, likely as a function of the increased radial forces FR.

The inventors have also recognized that the phenomena described above for an insert oriented so that its cutting edge forms an angle with a radial line extending from an axis of rotation of a workpiece, wherein the workpiece has a window with sides extending along radial lines, applies as well when the sides of the window are not oriented along the radial line, as long as the cutting edge of the insert is oriented so that it forms a sufficient angle with the sides of the window so that a large force is not generated when the insert contacts a side of the window after passing over the window.

It is desirable to obtain the advantages available through angling of the cutting edge relative to the sides of the window using equipment designed to hold conventional inserts in a conventional manner.

In accordance with an aspect of the present invention, an axial plunging cutting insert according to claim 1 comprises a top surface, a plurality of side surfaces, a chamfer between the top surface and at least one of the side surfaces, and a cutting edge between the chamfer and the at least one side surface, the chamfer intersects with the top surface at a rear edge of the chamfer and intersects with the side surface at a front edge of the chamfer, the chamfer is substantially flat, wherein the chamfer increases in size from an end of the chamfer closest to a first end of the cutting edge to an end of the chamfer closest to a second end of the cutting edge so that the cutting edge forms a non-zero angle with a plane of the top surface when viewed parallel to a plane of the top surface, wherein two non-parallel side surfaces extend from the at least one side surface so that a width of the insert between the non-parallel side surfaces decreases with increasing distance from the at least one side surface, and wherein the cutting edge extends an entire length of the side surface.

In accordance with another aspect of the present invention, an axial plunging cutting tool according to claim 10 comprises a cutting insert as described above, and a toolholder arranged to hold the cutting insert and move the cutting insert in a direction of an axis of rotation of a workpiece, the toolholder holding the cutting insert relative to the axis of rotation such that the cutting edge forms an angle with a radial line extending from the axis of rotation.

In accordance with yet another aspect of the present invention, a method of performing an axial plunging operation on a rotating workpiece according to claim 11, the workpiece having a window therein, the window having a substantially straight edge portion extending substantially along a radial line extending from an axis of rotation of the workpiece, comprises rotating the workpiece about the axis of rotation, and holding an axial plunging cutting insert having a cutting edge comprising a working portion and two non-working portions, the two non-working portions being disposed on opposite sides of the working portion, the cutting edge forming a non-zero angle with the radial line extending from the axis of rotation of the workpiece so that, when the workpiece is rotated and the substantially straight edge of the window contacts the cutting edge, the cutting edge forms a non-zero angle with the substantially straight edge of the window.

### BRIEF DESCRIPTION OF THE DRAWINGS

The features and advantages of the present invention are well understood by reading the following detailed description in conjunction with the drawings in which like numerals indicate similar elements and in which:
FIGS. 1A, 2A, and 3A are perspective views, FIGS. 1B, 2B, and 3B are top views, and FIGS. 1C, 2C, and 3C are cross-sectional views of a portion of a workpiece undergoing a prior art axial plunging operation at various stages in the operation;
FIGS. 4A and 4B are top and side cross-sectional views, respectively, of a portion of a workpiece undergoing a prior art axial plunging operation;
FIGS. 5A-5C are graphs showing axial cutting forces, tangential cutting forces, and radial cutting forces, respectively, during an axial plunging operation involving a workpiece with a window;
FIGS. 6A-6B are top and side cross-sectional views, respectively, of a portion of a workpiece undergoing an axial plunging operation according to an aspect of the present invention;
FIGS. 7A-7D are top, side, side cross-sectional, and partial, side cross-sectional views, respectively, of an insert according to an aspect of the present invention;
FIG. 8 is a side, partially cross-sectional view of a portion of a cutting tool according to an aspect of the present invention;
FIGS. 9A, 10A, and 11A are perspective views, FIGS. 9B, 10B, and 11B are top views, and FIGS. 9C, 10C, and 11C are cross-sectional views of a portion of a workpiece undergoing a an axial plunging operation according to an aspect of the present invention at various stages in the operation; and
FIG. 12 is a perspective view of a cutting insert.

### DETAILED DESCRIPTION

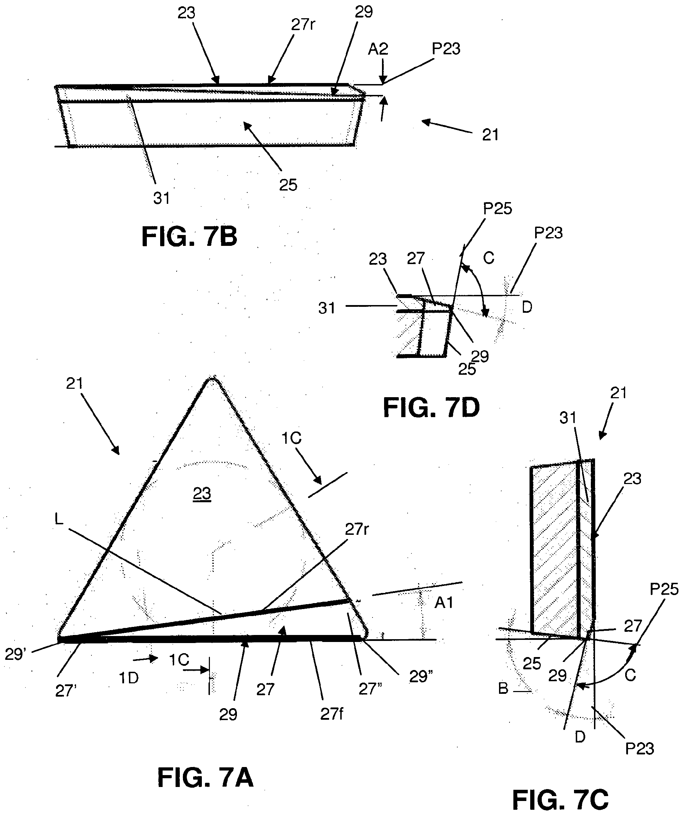

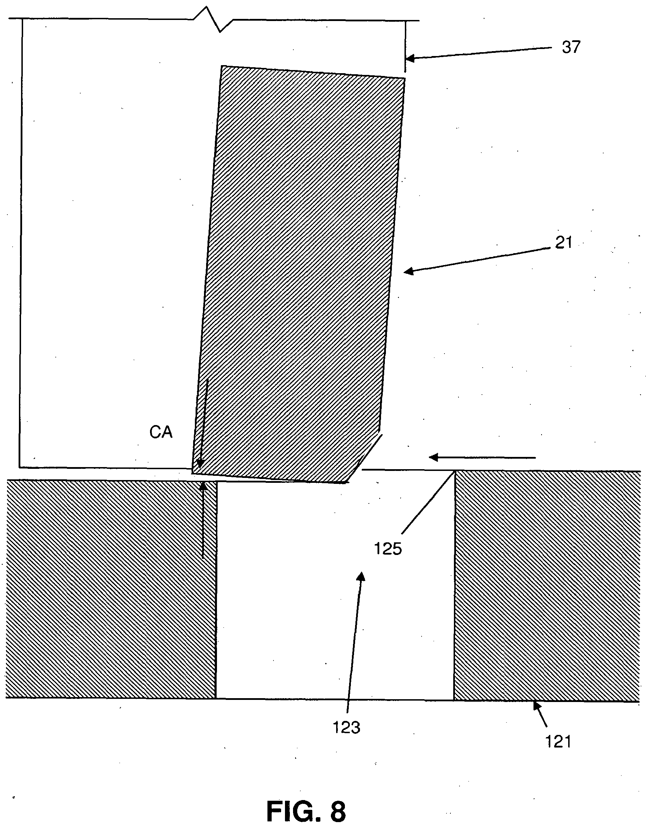

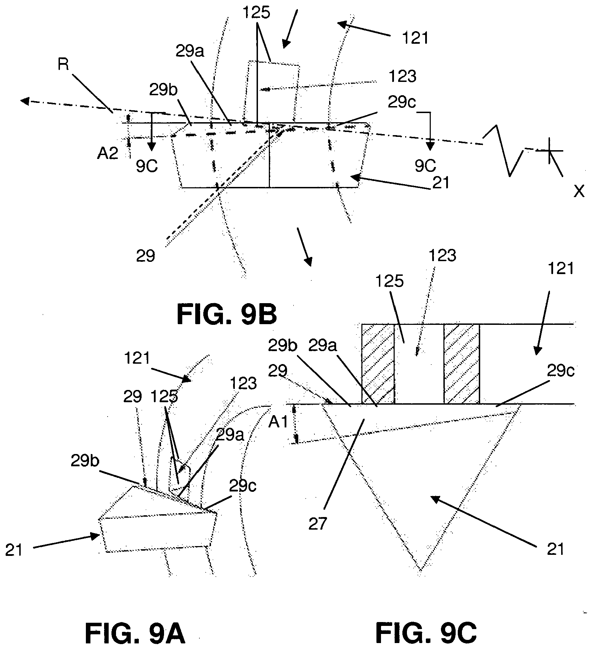

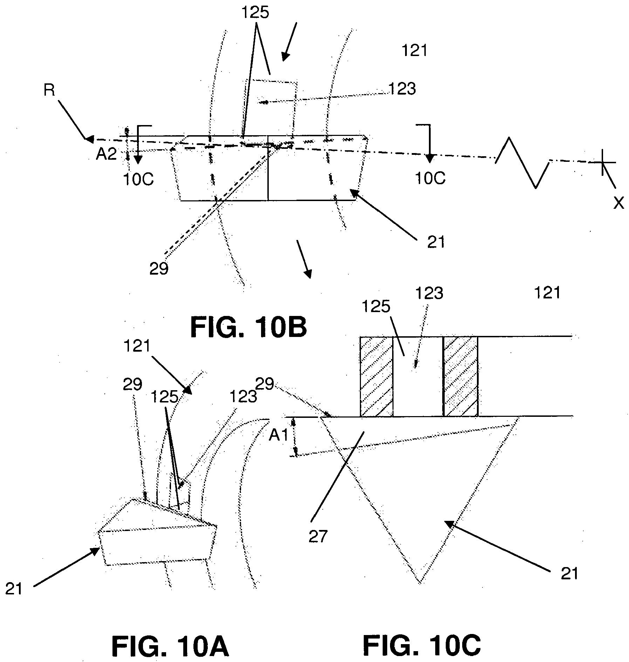

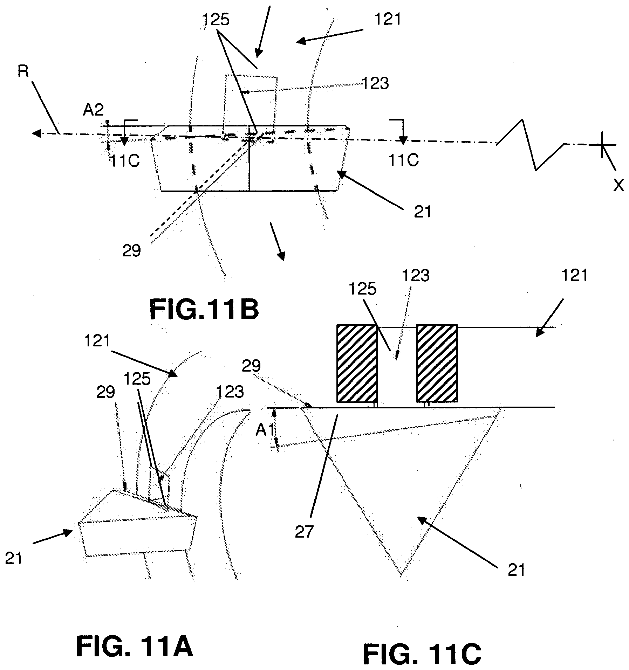

A cutting insert 21 according to an aspect of the present invention is shown in FIGS. 7A-7D. The cutting insert is particularly well suited for any applications that involve machining of a workpiece in which there is a relatively abrupt transition region, such as a "window", here broadly defined as a hole in the surface to be machined. The cutting insert 21 is particularly adapted for an axial plunging operation in which an annular portion of a rotating workpiece 121 as seen in FIGS. 8 and 9A-9C is machined or a groove is formed in an end of a rotating workpiece, where the workpiece has a window 123 with one or more substantially straight edge portions 125 extending substantially along a radial line R extending from an axis X of rotation of the workpiece as shown in FIGS. 9A-9C, 10A-10C, and 11A-11C.

The cutting insert 21 comprises a top surface 23, a side surface 25, a chamfer 27 between the top surface and the side surface, and a cutting edge 29 between the chamfer and the side surface. The chamfer 27 ordinarily increases in size from a first end 29' of the cutting edge 29 to a second end 29" of the cutting edge. As seen in FIGS. 9A-9C, the cutting edge 29 comprises a working portion 29a and two non-working portions 29b and 29c, the two non-working portions being disposed on opposite sides of the working portion. The working portion 29a is that portion of the cutting edge 29 that contacts the workpiece during normal operation, while the non-working portions 29b and 29c are not in contact. Ordinarily, the size of the insert 21 is selected as a function of the size of the workpiece upon which an axial plunging operation is to be performed and the working portion 29a will not extend to the edge of the insert and the insert will extend past edges of the workpiece. As seen in FIG. 7A, when viewed perpendicular to the plane P23 of the top surface 23, the line L extending from the rear 27r of the chamfer 27 at a first end 27' of the chamfer 25 to the rear of the chamfer at the second end 27" of the chamfer forms an angle A1 greater than 0° and less than 30° with the cutting edge 29 and, more preferably, greater than 0° and less than 20°, and, still more preferably, greater than 0° and no more than about 7.5°. As seen in FIG. 7B, when viewed parallel to the plane P23 of the top surface 23, the line L at the rear 27r of the chamfer 27 extending from the first end 27' of the chamfer to the second end 27" of the chamfer forms an angle A2 greater than 0° and less than 30° with the cutting edge 29 and, more preferably, greater than 0° and less than 15°, and, still more preferably, greater than 0° and no more than about 10°. Good results have been achieved with inserts wherein the angle A2 is about 2°. Where the top surface 23 is flat and planar, the line L lies in or parallel to the top surface and the cutting edge 29 forms the non-zero angle A2 with the plane P23 of the top surface when viewed parallel to the plane of the top surface.

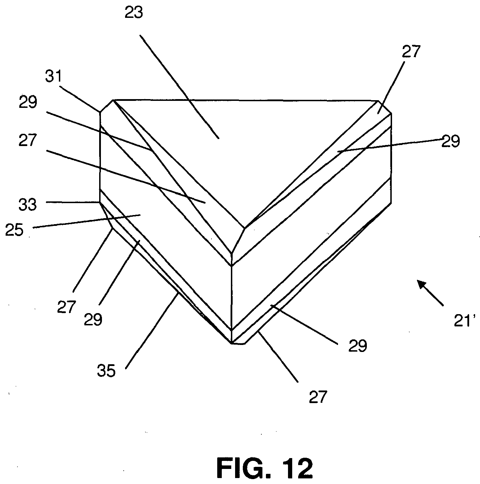

In inserts used in plunging operations, the first and second ends 29' and 29" of the cutting edge 29 will ordinarily be disposed proximate corners of the insert. In such applications, the insert 21 may be substantially triangular and have three side surfaces 25a, 25b, 25c. The insert may, however, when viewed from the top in plan, have sides extending at angles that are nearly perpendicular to the cutting edge. Usually, for an insert used in a plunging operation, the insert will be at least slightly narrower behind the cutting edge. The insert 21 can have one or a plurality of cutting edges, for example, cutting edges corresponding in number to the number of side surfaces, and a plurality of chamfers corresponding to the plurality of cutting edges. The insert 21' shown in FIG. 12 is double-sided and triangular and has six total cutting edges.

As seen in FIGS. 7B-7D, the cutting insert 21 can include at least a portion including the cutting edge 29 that is made of cubic boron nitride (CBN) or polycrystalline diamond. The entire insert 21 may be made of CBN or polycrystalline diamond, or just a top layer 31 as shown in FIG. 1. When the insert is a double-sided insert 21' as seen in FIG. 12, the layer 31 at the top surface 23 and a layer 33 at the bottom surface 35 (which can subsequently be turned over to become a top surface) can be made of CBN or polycrystalline diamond. Portions of the insert 21 not made of CBN or polycrystalline diamond can be made of another suitable material, such as cemented carbide. If the insert 21' is a double-sided insert such that the bottom surface 35 has cutting edges, the bottom surface will ordinarily either be identical to the top surface 23 so that the insert can be used for the same type of cutting operation regardless which side of the insert is used, or a mirror image, facilitating, e.g., use of one side of the insert on workpieces rotating in a clockwise direction and use of the other side of the insert on workpieces rotating in a counterclockwise direction.

As seen for example in FIG. 7A, the chamfer 27 intersects with the top surface 23 at a rear edge 27r of the chamfer and intersects with the side surface 25 at a front edge 27f of the chamfer. The intersection of the front edge 27f of the chamfer 27 with the side surface 25 ordinarily forms the cutting edge 29.

Ordinarily, at least a portion 37 of the side surface 25 adjacent the cutting edge 29 is substantially flat. The side surface 25 and the top surface 23 are ordinarily substantially flat. While the side surface 25 and the top surface 23 can be perpendicular to each other, the plane P23 of the top surface and the plane P25 of the side surface ordinarily form a non-perpendicular angle with each other. As seen in FIG. 7C, when viewed parallel to the plane P23 of the top surface 23, the side surface 25 and a line perpendicular to the plane of the top surface ordinarily form an angle B greater than 0° and less than 15° and, more preferably, greater than 0° and less than 10°, and, still more preferably, greater than 0° and no more than about 7°.

Ordinarily, the chamfer 27 is substantially flat and forms an acute angle D with a plane of the top surface 23 and an obtuse angle C with the plane P25 of the side surface 25. When viewed parallel to the plane P23 of the top surface 23, the chamfer 27 and the plane of the top surface ordinarily form an angle D greater than 0° and less than 30° and, more preferably, greater than 0° and less than 20°, and, still more preferably, greater than 0° and no more than about 15°.

FIG. 8 shows a cutting tool 37 for performing an axial plunging operation on a workpiece 121. The toolholder 37 holds the cutting insert 21 relative to the workpiece 121 with a working cutting edge 29 facing the workpiece. As seen in FIGS. 9A-9C, 10A-10C, and 11A-11C, the workpiece 121 is rotated about its longitudinal axis X relative to the insert 21 held by the cutting tool (not shown). The toolholder moves the cutting insert 21 in a direction of the axis X of rotation of the workpiece (or holds the cutting insert as the workpiece is moved along the axis of rotation). The toolholder holds the cutting insert 21 relative to the axis X of rotation such that the cutting edge forms an angle, such as negative angle N, with the radial line R extending from the axis of rotation. As seen in FIG. 8, the toolholder 37 also ordinarily holds the cutting insert 21 so that the side surface 25 of the insert beneath the cutting edge 29 forms a desired, non-zero clearance angle CA. The toolholder can hold the insert 21 so that the plane P23 of the top surface 23 substantially intersects the radial line R of the workpiece and, because the cutting edge 29 forms a non-zero angle A2 with the plane P23 of the top surface when viewed perpendicular to the plane of the top surface, the cutting edge will still form a negative angle N with the radial line. Thus, the insert 21 with the angled cutting edge 29 can be used in equipment designed to hold conventional inserts without angled cutting edges and the angled cutting edge can avoid losing and making contact with an edge or side of a window in a workpiece all at once. It will be appreciated that a conventional insert such as the insert 5 can be held by a toolholder adapted to hold the insert at an angle with the edges of the window in the workpiece to obtain benefits similar to those available through the insert 21 with the angled cutting edge 29.

A method of performing an axial plunging operation on a rotating workpiece 121, the workpiece having a window 123 therein, the window having a substantially straight edge portion 125 extending substantially along a radial line R extending from an axis X of rotation of the workpiece comprises rotating the workpiece about the axis of rotation. A cutting insert 21 having a cutting edge 29 is held at an angle, ordinarily a negative angle, with the radial line R extending from the axis X of rotation so that, when at least one of the cutting insert and the workpiece are moved relative to the other one of the cutting insert and the workpiece along the axis X of rotation, the cutting edge forms an angle with the substantially straight edge portion 125 of the window 123.

## Claims

1. An axial plunging cutting insert (21) comprising:
a top surface (23);
a plurality of side surfaces (25);
a chamfer (27) between the top surface (23) and at least one of the side surfaces (25); and
a cutting edge (29) between the chamfer (27) and the at least one side surface (25), the chamfer (27) intersects with the top surface (23) at a rear edge of the chamfer (27) and intersects with the side surface (25) at a front edge of the chamfer (27), the chamfer (27) is substantially flat and wherein two non-parallel side surfaces extend from the at least one side surface so that a width of the insert between the non-parallel side surfaces decreases with increasing distance from the at least one side surface
**characterized in that** the chamfer (27) increases in size from an end of the chamfer (27) closest to a first end (29') of the cutting edge (29) to an end of the chamfer (27) closest to a second end (29") of the cutting edge (29) so that the cutting edge (29) forms a non-zero angle (A2) with a plane of the top surface (23) when viewed parallel to a plane (P23) of the top surface (23), and **in that** the cutting edge (29) extends an entire length of the side surface (25).

2. The cutting insert (21) as set forth in claim 1, **characterized in that** at least a portion of the insert (21) including the cutting edge (29) is made of one of CBN and polycrystalline diamond.

3. The cutting insert (21) as set forth in any of claims 1-2, **characterized in that** at least a portion of the side surface (25) adjacent the cutting edge (29) is substantially flat.

4. The cutting insert (21) as set forth in any of claims 1-3, **characterized in that** the insert (21) is triangular and there are three side surfaces (25).

5. The cutting insert (21) as set forth in any of claims 1-4, **characterized in that** the chamfer (27) forms an acute angle (D) with a plane of the top surface (23) and an obtuse angle (C) with the plane (P25) of the side surface (25).

6. The cutting insert (21) as set forth in any of claims 1-5, **characterized in that**, when viewed perpendicular to a plane (P23) of the top surface (23), a line (L) extending along a rear edge (27r) of the chamfer 27 from a first end (27') of the chamfer (27) to a second end (27") of the chamfer (27) forms an angle (A1) with the cutting edge (29) greater than 0° and less than 30° with the cutting edge (29) and, more preferably, greater than 0° and less than 20°, and, still more preferably, greater than 0° and no more than about 7.5°.

7. The cutting insert (21) as set forth in any of claims 1-6, **characterized in that** the angle (A2) of the cutting edge (29) with the plane (P23) of the top surface (23) is greater than 0° and less than 30° and, more preferably, greater than 0° and less than 15°, and, still more preferably, greater than 0° and no more than about 10°.

8. The cutting insert (21) as set forth in any of claims 1-7, comprising:
a bottom surface (35);
a bottom chamfer (27) between the bottom surface (35) and the side surface (25); and
a bottom cutting edge (29) between the bottom chamfer (27) and the side surface (25),
**characterized in that** the bottom chamfer (27) increases in size from a first end (29') of the bottom cutting edge (29) to a second end (29") of the bottom cutting edge (29).

9. The cutting insert (21) as set forth in claim 8, wherein the bottom surface, the bottom chamfer (27), and the bottom cutting edge (29) are identical to the top surface (23), the chamfer (27), and the cutting edge (29).

10. An axial plunging cutting tool comprising:
an axial plunging cutting insert (21) as set forth in claim 1; and
a toolholder (37) arranged to hold the cutting insert (21).

11. A method of performing an axial plunging operation on a rotating workpiece (121), the workpiece (121) having a window (123) therein, the window (123) having a substantially straight edge portion (125) extending substantially along a radial line (R) extending from an axis (X) of rotation of the workpiece (121), comprising:
rotating the workpiece (121) about the axis (X) of rotation; and
holding an axial plunging cutting insert (21) having a cutting edge (29) comprising a working portion (29a) and two non-working portions (29b, 29c), the two non-working portions being disposed on opposite sides of the working portion, the cutting edge forming a non-zero angle with the radial line (R) extending from the axis (X) of rotation of the workpiece (121) so that, when the workpiece (121) is rotated and the substantially straight edge (125) of the window (123) contacts the cutting edge (29), the cutting edge (29) forms a non-zero angle with the substantially straight edge of the window (123).

12. The method as set forth in claim 11, **characterized in that** the insert (21) comprises a chamfer (27) between the top surface (23) and the side surface (25), and the cutting edge (29) is disposed between the chamfer (27) and the Side surface (25), the chamfer (27) increasing in size from a first end (29') of the cutting edge (29) to a second end (29") of the cutting edge (29) so that the cutting edge (29) forms a non-zero angle with a plane of the top surface (23) when viewed perpendicular to the plane of the top surface (23).

## Patentansprüche

1. Einsatz für ein axiales Einstechschneidwerkzeug, das aufweist:
eine obere Fläche (23);
eine Mehrzahl von Seitenflächen (25);
eine Fase (27) zwischen der oberen Fläche (23) und mindestens einer der Seitenflächen (25); und
eine Schneidkante (29) zwischen der Fase (27) und der mindestens einen Seitenfläche (25), wobei sich die Fase (27) mit der oberen Fläche (23) an einer hinteren Kante und mit der Seitenfläche (25) an ihrer vorderen Kante (27) schneidet und die Fase (27) im Wesentlichen eben ist, und wobei zwei nicht-parallele Seitenflächen sich von der mindestens einen Seitenfläche erstrecken, sodass die Breite des Einsatzes zwischen den nicht-parallelen Seitenflächen mit zunehmendem Abstand von der mindestens einen Seitenfläche abnimmt,
**dadurch gekennzeichnet, dass** das Maß der Fase (27) von dem Ende der Fase (27), das dem ersten Ende (29') der Schneidkante (29) am nächsten liegt, zu dem Ende der Fase (27), das dem zweiten Ende (29") der Schneidkante (29) am nächsten liegt, zunimmt, sodass die Schneidkante (29) in einer Sicht entlang einer Ebene (P23) parallel der oberen Fläche (23), einen von null verschiedenen Winkel (A2) mit einer Ebene der oberen Fläche (23) bildet und die Schneidkante (29) sich über eine ganze Länge der Seitenfläche (25) erstreckt.

2. Schneideinsatz (21) nach Anspruch 1, **dadurch gekennzeichnet, dass** mindestens ein Teil des Einsatzes (21), der die Schneidekante (29) einschließt, aus cBN und polykristallinem Diamant hergestellt ist.

3. Schneideinsatz (21) nach Anspruch 1-2, **dadurch gekennzeichnet, dass** mindestens ein Teil der Seitenfläche (25) neben der Schneidkante (29) im Wesentlichen eben ist.

4. Schneideinsatz (21) nach Anspruch 1-3, **dadurch gekennzeichnet, dass** der Einsatz (21) dreieckig ist und drei Seitenflächen (25) vorhanden sind.

5. Schneideinsatz (21) nach Anspruch 1-4, **dadurch gekennzeichnet, dass** die Fase (27) einen spitzen Winkel (D) mit einer Ebene der oberen Fläche (23) und einen stumpfen Winkel (C) mit der Ebene (P25) der Seitenfläche (25) bildet.

6. Schneideinsatz (21) nach Anspruch 1-5, **dadurch gekennzeichnet, dass** in der senkrechten Draufsicht auf eine Ebene (P23) der oberen Fläche (23), eine Linie (L) entlang einer hinteren Kante (27r) der Fase (27) von einem ersten Ende (27') der Fase (27) zu einem zweiten Ende (27") der Fase (27) verläuft, die einen Winkel (A1) mit der Schneidkante (29) größer als 0° und weniger als 30°, bevorzugter, größer als 0° und weniger als 20°, noch bevorzugter größer als 0° und nicht mehr als 7.5°, bildet.

7. Schneideinsatz (21) nach Anspruch 1-6, **dadurch gekennzeichnet, dass** der Winkel (A2) der Schneidkante (29) mit der Ebene (P23) der oberen Fläche größer als 0° und weniger als 30°, bevorzugter, größer als 0° und weniger als 15°, noch bevorzugter, größer als 0° und nicht mehr als 10°, ist.

8. Schneideinsatz (21) nach Anspruch 1-7, der aufweist:
eine untere Fläche (35);
eine untere Fase (27) zwischen der unteren Fläche (35) und der Seitenfläche (25); und
eine untere Schneidkante (29) zwischen der unteren Fase (27) und der Seitenfläche (25), **dadurch gekennzeichnet, dass** das Maß der unteren Fase (27) von einem ersten Ende (29') der unteren Schneidkante (29) hin zu einem zweiten Ende (29") der unteren Schneidkante (29) zunimmt.

9. Schneideinsatz (21) nach Anspruch 8, wobei die untere Fläche, die untere Fase (27), und die untere Schneidkante (29) identisch mit der oberen Fläche (23), der oberen Fase (27), und der oberen Schneidkante (29) sind.

10. Ein axiales Einstechschneidwerkzeug, das aufweist:
Einen axialen Einstechschneidwerkzeugeinsatz (21) nach Anspruch 1 und einen Werkzeughalter (37), der dafür ausgelegt ist, den Schneideinsatz zu halten (21).

11. Verfahren für das Durchführen eines axialen Einstechschneidvorgangs an einem rotierenden Werkstück (121), wobei das Werkstück (121) ein Fenster (123) hat und das Fenster (123) einen im Wesentlichen geraden Kantenabschnitt (125) aufweist, der im Wesentlichen entlang einer radialen Linie (R) verläuft, die sich von einer Rotationsachse (X) des Werkstücks (121) erstreckt, wobei das Verfahren aufweist:
Drehen des Werkstücks (121) um die Rotationsachse (X) und Halten eines axialen Einstechschneidwerkzeugeinsatzes (21), der eine Schneidkante (29) hat, die einen Arbeitsabschnitt (29a) und zwei nicht-arbeitende Abschnitte (29b, 29C) aufweist, wobei die zwei nichtarbeitenden Abschnitte auf entgegengesetzten Seiten des arbeitenden Abschnittes angeordnet sind, wobei die Schneidkante einen von null verschiedenen Winkel mit der Radiallinie (R), bildet, die sich von der Rotationsachse (X) des Werkstücks (121) so erstreckt, dass wenn das Werkstück (121) gedreht wird und die im Wesentlichen gerade Kante (125) des Fensters (123) die Schneidkante (29) berührt, die Schneidkante (29) einen von null verschiedenen Winkel mit der im Wesentlichen geraden Kante des Fenster (123) bildet.

12. Verfahren nach Anspruch 11, **dadurch gekennzeichnet, dass** der Einsatz (21) eine Fase (27) zwischen der oberen Fläche (23) und der Seitenfläche (25) aufweist, und die Schneidkante (29) zwischen Fase (27) und der Seitenfläche (25) angeordnet ist, wobei das Maß der Fase (27) vom ersten Ende (29') der Schneidkante (29) zum zweiten Ende (29") der Schneidkante (29) so zunimmt, dass die Schneidkante (29) einen von null verschiedenen Winkel, mit der Ebene der oberen Fläche (23) bei Draufsicht senkrecht auf die Ebene der oberen Fläche (23), bildet.

## Revendications

1. Insert de coupe en plongée axiale (21) comprenant :
une surface supérieure (23) ;
une pluralité de surfaces latérales (25) ;
un chanfrein (27) entre la surface supérieure (23) et au moins une des surfaces latérales (25) ; et
une arête de coupe (29) entre le chanfrein (27) et la au moins une surface latérale (25), le chanfrein (27) ayant une intersection avec la surface supérieure (23) au niveau d'une arête arrière du chanfrein (27) et une intersection avec la surface latérale (25) au niveau d'une arête avant du chanfrein (27), le chanfrein (27) est substantiellement plat et dans lequel deux surfaces latérales non parallèles s'étendent à partir de la au moins une surface latérale de sorte qu'une largeur de l'insert entre les surfaces latérales non parallèles diminue lorsque la distance par rapport à la au moins une surface latérale augmente,
**caractérisé en ce que** le chanfrein (27) augmente de taille à partir d'une extrémité du chanfrein (27) la plus proche d'une première extrémité (29') de l'arête de coupe jusqu'à une extrémité du chanfrein (27) la plus proche d'une deuxième extrémité (29") de l'arête de coupe (29) de sorte que l'arête de coupe (29) forme un angle non nul (A2) avec un plan de la surface supérieure (23) comme observé parallèlement à un plan (P23) de la surface supérieure (23), et **en ce que** l'arête de coupe (29) s'étend sur une longueur entière de la surface latérale (25).

2. Insert de coupe (21) selon la revendication 1, **caractérisé en ce qu'**au moins une partie de l'insert (21) incluant l'arête de coupe (29) est constituée de l'un d'un CBN et d'un diamant polycristallin.

3. Insert de coupe (21) selon l'une quelconque des revendications 1 et 2, **caractérisé en ce qu'**au moins une partie de la surface latérale (25) adjacente à l'arête de coupe (29) est substantiellement plate.

4. Insert de coupe (21) selon l'une quelconque des revendications 1 à 3, **caractérisé en ce que** l'insert (21) est triangulaire et **en ce qu'**il existe trois surfaces latérales (25).

5. Insert de coupe (21) selon l'une quelconque des revendications 1 à 4, **caractérisé en ce que** le chanfrein (27) forme un angle aigu (D) avec un plan de la surface supérieure (23) et un angle obtus (C) avec le plan (P25) de la surface latérale (25).

6. Insert de coupe (21) selon l'une quelconque des revendications 1 à 5, **caractérisé en ce que**, comme observé perpendiculairement à un plan (P23) de la surface supérieure (23), une ligne (L) s'étendant le long d'une arête arrière (27r) du chanfrein 27 à partir d'une première extrémité (27') du chanfrein (27) jusqu'à une deuxième extrémité (27") du chanfrein (27) forme un angle (A1) avec l'arête de coupe (29) supérieur à 0° et inférieur à 30° avec l'arête de coupe (29) et, de façon davantage préférée, supérieur à 0° et inférieur à 20°, et, de façon encore davantage préférée, supérieur à 0° et pas plus grand qu'environ 7,5°.

7. Insert de coupe (21) selon l'une quelconque des revendications 1 à 6, **caractérisé en ce que** l'angle (A2) de l'arête de coupe (29) avec le plan (P23) de la surface supérieure (23) est supérieur à 0° et inférieur à 30° et, de façon davantage préférée, supérieur à 0° et inférieur à 15°, et, de façon encore davantage préférée, supérieur à 0° et pas plus grand qu'environ 10°.

8. Insert de coupe (21) selon l'une quelconque des revendications 1 à 7, comprenant :
une surface inférieure (35) ;
un chanfrein inférieur (27) entre la surface inférieure (35) et la surface latérale (25) ; et
un arête de coupe inférieure (29) entre le chanfrein inférieur (27) et la surface latérale (25),
**caractérisé en ce que** le chanfrein inférieur (27) augmente de taille à partir d'une première extrémité (29') de l'arête de coupe inférieure (29) jusqu'à une deuxième extrémité (29") de l'arête de coupe inférieure (29).

9. Insert de coupe (21) selon la revendication 8, dans lequel la surface inférieure, le chanfrein inférieur (27), et l'arête de coupe inférieure (29) sont identiques à la surface supérieure (23), le chanfrein (27), et l'arête de coupe (29).

10. Outil de coupe en plongée axiale comprenant :
un insert de coupe en plongée axiale (21) selon la revendication 1 ; et
un porte-outil (37) destiné à supporter l'insert de coupe (21).

11. Procédé destiné à réaliser une opération en plongée axiale sur une pièce à usiner tournante (121), la pièce à usiner (121) ayant une fenêtre (123) dans celle-ci, la fenêtre (123) ayant une partie d'arête substantiellement droite (125) s'étendant substantiellement le long d'une ligne radiale (R) s'étendant à partir d'un axe (X) de rotation de la pièce à usiner (121), comprenant les étapes consistant à :
entraîner en rotation la pièce à usiner (121) autour de l'axe (X) de rotation ; et
supporter un insert de coupe en plongée axiale (21) ayant une arête de coupe (29) comprenant une partie active (29a) et deux parties inactives (29b, 29c), les deux parties inactives étant disposées sur des côtés opposés de la partie active, l'arête de coupe forme un angle non nul avec la ligne radiale (R) s'étendant à partir de l'axe (X) de rotation de la pièce à usiner (121) de sorte que, lorsque la pièce à usiner (121) est entraînée en rotation et que l'arête substantiellement droite (125) de la fenêtre (123) est en contact avec l'arête de coupe (29), l'arête de coupe (29) forme un angle non nul avec l'arête substantiellement droite de la fenêtre (123).

12. Procédé selon la revendication 11, **caractérisé en ce que** l'insert (21) comprend un chanfrein (27) entre la surface supérieure (23) et la surface latérale (25), et l'arête de coupe (29) est disposée entre le chanfrein (27) et la surface latérale (25), le chanfrein (27) augmentant de taille à partir d'une première extrémité (29') de l'arête de coupe (29) jusqu'à une deuxième extrémité (29") de l'arête de coupe (29) de sorte que l'arête de coupe (29) forme un angle non nul avec un plan de la surface supérieure (23) comme observé perpendiculairement au plan de la surface supérieure (23).
